# EUROPEAN PATENT APPLICATION

(11) **EP 1 505 430 A1**
(43) Date of publication of application: **09.02.2005**
(21) Application number: 03723360.8
(22) Date of filing: 14.05.2003
(51) Int. Cl.: G02F 1/35

(54) **LIGHT TRANMITTING MEDIUM**

(30) Priority: 15.05.2002 JP 2002140454; 08.04.2003 JP 2003103650
(71) Applicant: National Institute of Advanced Industrial Science and Technology, Tokyo 100-8921 (JP); Alnair Laboratories Corporation, Kawaguchi-shi, Saitama 332-0015 (JP)
(72) Inventor: SAKAKIBARA, Y. Nat. Inst. Adv. Ind. Science&Tech., Tsukuba-shi, Ibaraki 305-8565 (JP); TOKUMOTO, M.. Nat. Inst. Adv. Ind. Science&Tech., Tsukuba-shi, Ibaraki 305-8568 (JP); ACHIBA, Yohji, Tama-shi, Tokyo 206-0025 (JP); KATAURA, Hiromichi, Hachioji-shi, Tokyo 192-0916 (JP); TANAKA, Yuichi, Koganei-shi, Tokyo 184-0013 (JP); JABLONSKI, Mark, Kenneth, Itabashi-ku, Tokyo 175-0083 (JP)
(74) Representative: CAPRI
(86) International application number: PCT/JP2003/005973
(87) International publication number: WO 2003/098341

(57) **Abstract**

Non-linear optical characteristics of a carbon nanotube are applied to an optical communication field. An optical transmission medium (12) obtained by incorporating a carbon nanotube having optically non-linear characteristics into a non-linear light transmitting medium is assembled between typical optical transmission medium (14a, 14b) and is used by being combined with an optical circulator (16), whereby the resultant product is used as an optical fuse (breaker) that transmits a normal signal light A but blocks the transmission of an abnormal-intensity light inadvertently produced.

## Description

### TECHNICAL FIELD

The present invention relates to an optical transmission medium suitable for optical communications field.

### BACKGROUND ART

New materials using carbon nanotubes have been widely developed in recent years.

In particular, an optical nonlinear characteristic of carbon nanotubes is one of characteristics expected to find application in future development of new functional materials.

It has been well known that if an optical amplifier which relays a signal light, malfunctions or a signal light propagating in an optical transmission medium is spontaneously deflected, a light with an abnormally high intensity is generated in the optical transmission medium.

The problem was that when such an effect occurred in an optical transmission medium, communication devices coupled with the optical transmission medium were destructed by the light with an abnormally high intensity and, therefore, normal optical transmission could not be continued.

The inventors of the present application have conducted a comprehensive study of this effect and have found that applying an optical nonlinear characteristic of carbon nanotubes to the field of optics, more specifically optical communications, makes it possible for the optical transmission medium comprising carbon nanotubes to demonstrate a variety of unique functions.

One of the discovered functions is as follows. Thus, when an optical transmission medium obtained by including carbon nanotubes into a nonlinear optical transmission medium is used in combination with an optical nonreciprocal circuit (for example, an optical circulator), then this optical transmission medium can function as an optical fuse (optical breaker) which blocks the transmission of light with an abnormally high intensity, but allows the signal light with normal light intensity to pass.

Furthermore, it was also discovered that using the difference in dispersion characteristics of carbon nanotubes and a nonlinear optical transmission medium comprising carbon nanotubes allows the optical transmission medium obtained by introducing carbon nanotubes into the nonlinear optical transmission media to function as a dispersion compensating element.

Accordingly, a first object of the present invention is to provide an optical transmission medium obtained by introducing carbon nanotubes into a nonlinear optical transmission media.

Further, a second object of the present invention is to provide an optical fuse composed by using an optical transmission medium obtained by introducing carbon nanotubes into a nonlinear optical transmission medium.

Further, a third object of the present invention is to provide a dispersion compensating element using an optical transmission medium obtained by introducing carbon nanotubes into a nonlinear optical transmission medium.

### DISCLOSURE OF THE INVENTION

The optical transmission medium in accordance with the present invention comprises carbon nanotubes having an optical nonlinear characteristic in an optical transmission medium having an optical nonlinear characteristic.

With such a configuration, the optical nonlinear characteristic of the optical transmission medium becomes remarkable. For example, the nonlinear refractive index characteristic, which is a characteristic of nonlinear optical transmission media becomes even more remarkable because it is combined with a nonlinear refractive index characteristic of carbon nanotubes having an optical nonlinear characteristic. As a result, the optical nonlinear characteristic of the optical transmission medium is increased and a high nonlinear refractive index characteristic can be provided.

Furthermore, it is preferred that the nonlinear optical transmission medium be a single-mode optical fiber.

Because the optical fibers used as optical transmission paths for optical communication are single-mode optical fibers, the advantage of using the nonlinear optical transmission medium in the form of a single-mode optical fiber is that this enables the compatibility with the optical fibers constituting the optical transmission paths of optical communication. If a nonlinear optical transmission medium is a multimode optical fiber, then such a media is not easy to connect to the optical fiber used as an optical transmission path for optical communication. As a result, it is practically impossible to incorporate the nonlinear optical transmission medium into part of the optical transmission path for optical communication.

It is also preferred that the melting point of the nonlinear optical transmission medium be 1200°C or less.

In such a case, when the nonlinear optical transmission medium is melted, the melt temperature can be made not higher than 1200°C. Therefore, carbon nanotubes of which composition can be destructed and functions can be lost when heated at a temperature of about 1200°C can be safely introduced into the nonlinear optical transmission medium and formed therewith.

It is also preferred that the core of the optical fiber be composed of any material selected from bismuth oxide, a synthetic resin comprising bismuth oxide, a glass-based component comprising bismuth oxide, and a fluoride-based component comprising bismuth oxide.

It is also preferred that the optical transmission medium be an optical fuse.

In such a case, the optical transmission medium can function as an optical fuse (optical breaker) which blocks the passage of light of abnormally high intensity and passes a signal light having normal optical intensity.

Further, it is preferred that the optical transmission medium be a dispersion compensating element.

In such a case, the occurrence of communication error or the like caused by changes in the optical signal pulse shape due to dispersion of the transmission path in highspeed optical communication with a long transmission distance can be prevented.

It is also preferred that the carbon nanotubes be soluble in organic solvents.

In such a case, the occurrence of undesirable scattered light in the optical transmission medium can be suppressed to a greater extent than when an optical fiber is fabricated by using non-soluble carbon nanotubes.

### BRIEF DESCRIPTION OF THE DRAWINGS

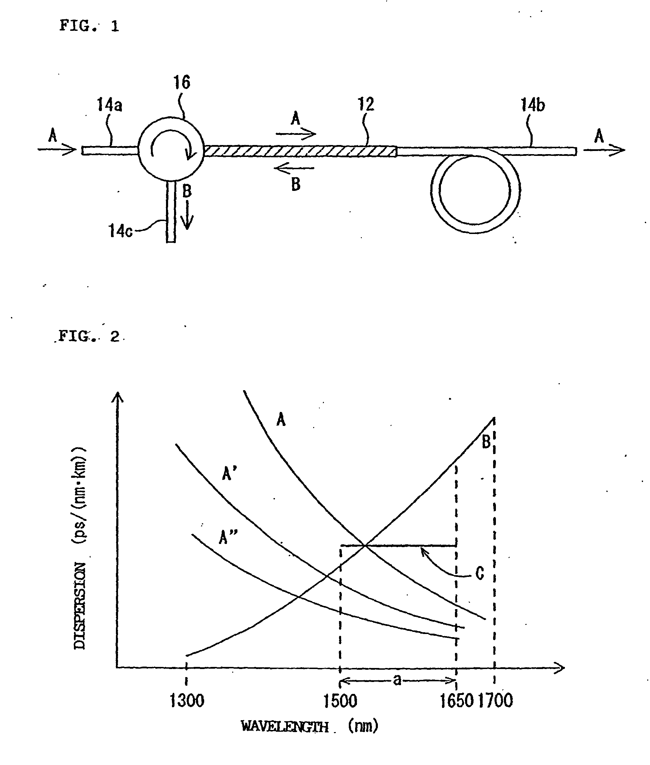

FIG. 1 and FIG. 2 explain an embodiment of the present invention.

### BEST MODE FOR CARRYING OUT THE INVENTION

An embodiment of the present invention will be described hereinbelow with reference to the drawings. The size, shape and mutual arrangement of the structural components in the figures are shown schematically merely to facilitate the understanding of the present invention. Therefore, the present invention is not limited to the example shown in the figures.

### (1) Fabrication of carbon nanotubes

In the present embodiment, a single-wall carbon nanotube (SWNT: Single-Wall carbon NanoTube; hereinbelow referred to as SWNT), where one graphen formed by a six-membered ring structure of carbon atoms (C) constitutes a tube structure, is used. Carbon nanotubes are not limited to SWNT, and the present invention can be also appropriately applied to multiwall carbon nanotubes (MWNT: Multi-Wall carbon NanoTube; hereinbelow referred to as MWNT) where a graphen with a multiwall structure constitutes a tube structure.

### (1-1) Fabrication of typical carbon nanotube

It is well known that various methods such as a laser evaporation method and an arc discharge method can be advantageously employed for the fabrication of a typical SWNT. An example of the method for the fabrication of a SWNT by a laser evaporation method will be briefly described below.

First, a (metal/carbon) composite rod comprising transition metal elements, for example cobalt (Co) and nickel (Ni), in an amount of several atomic percents each (for example, 0.6 at.% each) is fabricated.

The composite rod is then heated at a temperature of about 1200°C in an electric furnace and a SWNT is fabricated by instantaneously evaporating carbon and the catalyst metals with a Nd-YAG pulse laser (10 Hz), while introducing argon (Ar) gas at 50 sccm under a pressure of 500 Torr. In some cases, impurities such as byproducts are admixed to the SWNT thus obtained. Therefore, it is preferred that the SWNT be purified by a hydrothermal method, centrifugal separation method, ultrafiltration, or the like. (1-2) Fabrication of soluble carbon nanotubes

The SWNT obtained in (1-1) are insoluble, but soluble SWNT (S-SWNT) which are soluble, for example, in organic solvents, can be fabricated by the following process.

First, the SWNT obtained in (1-1) are ultrasonically treated in a mixed solution prepared, for example, by mixing an oxidizing concentrated sulfuric acid (purity 98%) and concentrated nitric acid (purity 70%) at a ratio of 3:1 in order to cut the SWNT that had an average length prior to the ultrasonic treatment of about 280 nm to an average length of about 150 nm.

Then, both ends of the SWNT (length about 100-300 nm) that have both ends thereof open owing to the cutting are chemically modified, for example, with thionyl chloride (SOCl₂) and octadecylamine (ODA: CH₃(CH₂)₁₇NH₂) to fabricate SWNT-CONH(CH₂)₁₇CH₃ which are S-SWNT. Further, SWNT-CONH-4-C₆H₄(CH₂)₁₃CH₃ which are the S-SWNT having even higher solubility in the organic solvents can be fabricated by reacting 4-dodecylaniline (4-CH₃(CH₂)₁₃C₆H₄NH₂) with SWNT-COCl which is the intermediate in the aforementioned reaction for the fabrication of S-SWNT. The above-described method for the fabrication of S-SWNT is not limiting, and appropriate S-SWNT are fabricated according to the design or object.

### (2) Verification of optical nonlinear characteristic of carbon nanotubes

First, a thin film (hereinbelow simply called a SWNT thin film) prepared of the carbon nanotubes (either of SWNT and S-SWNT or both) purified in (1) is fabricated. For the fabrication of the SWNT thin film, a dispersion solution obtained by dispersing SWNT in a dispersion medium is spray coated on a transparent optical material, that is, on a transparent substrate such as a glass substrate.

When the SWNT thin film was illuminated with light having the prescribed intensity, changes in the refractive index of the SWNT thin film were proportional to the intensity of the incident light. Therefore, in terms of the refractive index, the carbon nanotubes were confirmed to be a material having a nonlinear characteristic with respect to light intensity.

### (3) Fabrication of optical transmission medium composed by introducing carbon nanotubes into nonlinear optical transmission medium

In this embodiment, the explanation will be conducted with respect to an example in which a bismuth-containing optical fiber comprising bismuth oxide (Bi₂O₃) in the core is used as a nonlinear optical transmission medium in the fabrication of an optical transmission medium by introducing carbon nanotubes into the nonlinear optical transmission medium.

More specifically, an optical transmission medium is fabricated by adding an appropriate amount of carbon nanotubes to bismuth oxide which is the main component of the optical fiber core.

It is well known that various methods such as a double-wall crucible method, MCVD (modified CVD method) or VAD (vapor phase axial deposition) can be used for the fabrication of optical fibers which are the optical transmission medium. An example of the method for the fabrication of an optical fiber by a double-wall crucible method will be briefly described below.

First, bismuth oxide and a small quantity of glass-based components serving as core materials are placed in the inner container of a double-wall crucible made of platinum. Then, bismuth oxide and a small quantity of glass-based components having a mixing ratio adjusted so as to obtain a refractive index lower than that of the core are placed as clad materials into the outer container for the double-wall crucible.

Those materials are then melted and a prescribed amount of carbon nanotubes (either of SWNT and S-SWNT or both) with a diameter within a range of about 1.0 nm to 1.5 nm, that were purified by the method described in section (1) are added to the inner container and stirred therein. An optical fiber is then fabricated by conducting drawing by the usual method. The quantity of carbon nanotubes added to bismuth or detailed characteristics of the method for the manufacture of an optical fiber are appropriately determined according to the object and design.

The bismuth-containing optical fiber thus obtained has a high nonlinear refractive index characteristic because the nonlinear refractive index characteristic of the carbon nanotubes is provided in addition to the nonlinear refractive index characteristic of bismuth in the core.

Further, in particular, if an optical fiber is fabricated by adding S-SWNT, the occurrence of undesirable light scattering can be advantageously suppressed in comparison with the case of fabricating an optical fibers by using only SWNT which are insoluble in organic solvents.

In selecting an optical fiber material for molding the core comprising the carbon nanotubes, it is preferred that the material have a melting point of 1200°C or less. This is because the optical fiber material is heated to a temperature of the melting point thereof or higher when the optical fiber is formed, and this heating can cause the destruction of carbon nanotube composition or loss of function thereof.

Because the melting point of bismuth oxide (about 824°C) is lower than the temperature of about 1200°C at which the carbon nanotube composition can be destructed and functions thereof can be lost, the nonlinear refractive index of bismuth oxide is higher than the nonlinear refractive index of other optical fiber materials for cores, such as synthetic resins. Therefore, bismuth oxide, in combination with carbon nanotubes, can be considered as an advantageous optical fiber materials.

However, the materials of the nonlinear optical transmission medium having carbon nanotubes introduced therein are not limited to bismuth oxide. Thus, synthetic resins, (plastics), glass-based materials and fluoride based materials may be used and carbon nanotubes may be introduced therein, provided that such materials have a sufficient nonlinear refractive index, have a melting point of less than 1200°C and cause no destruction of carbon nanotube composition or loss of functions thereof due to heating for melting when the optical fiber is formed.

### (4) Example of the structure of an optical transmission medium composed by introducing carbon nanotubes into a nonlinear optical transmission medium

### (4-a) Optical fuse (breaker)

FIG. 1 shows schematically an example of a configuration in which an optical transmission medium in accordance with the present invention, which is composed by introducing carbon nanotubes into a nonlinear optical transmission medium (hereinbelow will be sometimes referred to as SWNT-containing optical transmission medium), is used as an optical fuse.

More specifically, an SWNT-containing optical transmission medium 12 fabricated by the method described in section (3) is inserted between the typical optical transmission medium 14a and 14b (here, both media are assumed to be bismuth oxide optical fibers), as shown in FIG. 1. Further, for example, an optical circulator 16 is disposed in front of the SWNT-containing optical transmission medium 12 (here, between the optical transmission medium 14a and the SWNT-containing optical transmission medium 12). A typical optical transmission medium 14c for guiding light outputted from the optical circulator 16 is connected to the optical circulator 16.

Signal light A incoming from the outside via the optical transmission medium 14a outgoes from the optical transmission medium 14b after passing through the SWNT-containing optical transmission medium 12.

The optical circulator 16 has a function of guiding the signal light A that propagates from the optical transmission medium 14a toward the SWNT-containing optical transmission medium 12 in the direction from the optical transmission medium 14a to the SWNT-containing optical transmission medium 12, as shown in FIG. 1. On the other hand, with respect to the light B propagating from the SWNT-containing optical transmission medium 12 toward the optical transmission medium 14a, as shown in Fig. 1, it has a function of guiding toward the optical transmission medium 14c.

The operation of the SWNT-containing optical transmission medium 12 as an optical fuse will be schematically described below.

First, the signal light A incident upon the optical transmission medium 14a passes through the optical circulator 16 and falls on the SWNT-containing optical transmission medium 12.

At this time, as has already been described in section (3), the below-described effect occurs in the SWNT-containing optical transmission medium 12 due to a high nonlinear refractive index characteristic of the SWNT-containing optical transmission medium 12.

Thus, a standing wave is formed due to interference of the signal light (incident light) A falling on the SWNT-containing optical transmission medium 12 from the side of optical transmission medium 14a and the light (reflected light) produced by the reflection of this signal light A on the boundary of the SWNT-containing optical transmission medium 12 and the optical transmission medium 14b.

As a result, due to the generation of the light intensity distribution corresponding to this standing wave, a periodic refractive index distribution, that is, a diffraction grating is formed in the longitudinal direction of the SWNT-containing optical transmission medium 12. The refractive index modulation degree of the diffraction grating (difference between the refractive indexes on the portion with a high refractive index and a portion with a low refractive index) depends on the intensity of light falling on the SWNT-containing optical transmission medium 12, and the higher is the intensity of this falling light, the larger is the refractive index modulation degree.

Thus, when the light intensity of the signal light A becomes abnormally high, the refractive index modulation degree of the above-mentioned diffraction grating increases and, therefore, the reflection ratio from this diffraction grating with respect to this light with abnormal intensity increases.

As a result, this light with abnormal intensity is almost 100% reflected by the diffraction grating formed on the portion of the SWNT-containing optical transmission medium 12, and cannot pass through the SWNT-containing optical transmission medium 12.

Further, the light with abnormal intensity that could not pass through the SWNT-containing optical transmission medium 12 becomes the light (backward light B) propagating in the direction opposite that of the signal light A, is sent out to the optical transmission medium 14c via the optical circulator 16, and then can be released from the system.

However, because no substantial nonlinear optical effect is observed in the SWNT-containing optical transmission medium 12 with respect to the signal light A having a usual light intensity, this light can pass through the SWNT-containing optical transmission medium 12.

Thus, the optical transmission medium 12 composed by introducing carbon nanotubes into a nonlinear optical transmission medium can be used as an optical fuse (breaker) that transmits the normal signal light A, but blocks the transmission of a light with abnormal intensity that was undesirably generated.

### (4-b) Dispersion compensating element

An example of the dispersion characteristics of carbon nanotubes and a typical optical transmission medium (an optical fiber is assumed herein) will be described below with reference to FIG. 2. In the figure, a dispersion (units: ps/(nm·km)) is plotted against the ordinate, and a wavelength (units: nm) is plotted against the abscissa. The absolute value of the dispersion is proportional to the length of the optical fiber and content of carbon nanotubes. For this reason, the absolute value of dispersion by itself is not represented on the ordinate, but the scale on the ordinate is an arbitrary scale proportional to the absolute value of he dispersion. On the other hand, the abscissa shows a range from the wavelength of 1300 nm to a wavelength of 1700 nm.

In FIG. 2, curve A shows the dispersion characteristic of carbon nanotubes with a certain diameter, and curve B shows a dispersion characteristic of a typical optical fiber.

The results of the comprehensive study conducted by the inventors confirmed that the dispersion characteristic (curve A) of the carbon nanotubes (SWNT or S-SWNT) purified by the method described in (1) depends on the diameter of carbon nanotubes and shifts to the curve A' or curve A''.

Further, in optical communications, it is preferred that the higher is the transmission rate or the longer is the transmission distance, the lower is the dispersion of optical fibers. Therefore, when an optical fiber for optical communications is fabricated, it is desired that the design be such that the dispersion becomes zero (a state in which the refractive index does not depend on the wavelength) in a wide wavelength range.

If carbon nanotubes having the prescribed diameter, for example, such that a refractive index characteristics represented by curve A is demonstrated is added to an optical fiber material such that a refractive index characteristics represented by curve B is demonstrated, then a state can be produced in which the dispersion characteristic of the optical fiber and the dispersion characteristic of the carbon nanotubes cancel each other. In other words, in the wavelength region (a), the so-called flat state, that is a state in which the dispersion value does not depend on the wavelength, can be realized on the dispersion characteristic (represented by curve C) of the optical transmission medium comprising carbon nanotubes, in the wavelength region (a).

As a result, fabricating an optical transmission medium by varying the diameter of carbon nanotubes that are added to a nonlinear optical transmission medium according to the object or design makes it possible to use this optical transmission medium as a dispersion compensating element (fiber) which compensates the wavelength dispersion of the signal light propagating in this optical transmission medium. In other words, the wavelength dispersion can be controlled by using the dispersion characteristic of carbon nanotubes.

Further, the diameter of carbon nanotubes in this case is preferably within a range of from about 1.0 nm to 1.5 nm. This is because, the dispersion characteristic of carbon nanotubes having a diameter within this range is a dispersion characteristic shown in FIG. 2 with respect to the light with a wavelength within a range of from about 1100 nm to 1800 nm. Therefore, for example, the dispersion characteristic of optical fibers that are currently widely used has a projection on the lower side with a peak in the vicinity of a wavelength of 1550 nm, whereas the dispersion characteristic of the carbon nanotubes has an inverted shape. Therefore, the dispersion value of the optical fibers can be effectively reduced to zero within a wide range by adjusting the diameter of carbon nanotubes and controlling (shifting) the absorption wavelength.

The aforementioned implementation conditions of the present invention are not limited to the above-described combinations. Therefore, the present invention can be utilized by combining advantageous conditions at any advantageous stage.

### INDUSTRIAL APPLICABILITY

As described hereinabove, in accordance with the present invention, the nonlinear characteristic of an optical transmission medium obtained by introducing carbon nanotubes into a nonlinear optical transmission medium is demonstrated to a greater extent than in the conventional optical transmission medium, and a variety of unique functions can be provided by employing an optical transmission medium obtained by introducing carbon nanotubes into a nonlinear optical transmission medium, for example, in the field of optical communications.

For example, an optical transmission medium having a high nonlinear refractive index characteristic is one of the new functional materials that can be obtained by employing carbon nanotubes in the field of optical communications, and such an optical transmission medium can be used as an optical fuse by incorporating in part of an optical transmission path of optical communication.

Further, an optical transmission medium composed by introducing carbon nanotubes having a prescribed diameter can be used as a dispersion compensating element (fiber) for compensating the wavelength dispersion of signal light.

## Claims

1. An optical transmission medium that comprises, in a nonlinear optical transmission medium, carbon nanotubes having an optical nonlinear characteristic are introduced.

2. The optical transmission medium according to claim 1, wherein said nonlinear optical transmission medium is a single-mode optical fiber.

3. The optical transmission medium according to claim 2, wherein a core of said optical fiber is composed of any material of bismuth oxide, a synthetic resin comprising bismuth oxide, a glass-based component comprising bismuth oxide, and a fluoride-based component comprising bismuth oxide.

4. The optical transmission medium according to any of claims 1 to 3, wherein the melting point of said nonlinear optical transmission medium is 1200°C or less.

5. The optical transmission medium according to any of claims 1 to 4, wherein said optical transmission medium is an optical fuse.

6. The optical transmission medium according to any of claims 1 to 5, wherein said optical transmission medium is a dispersion compensating element.

7. The optical transmission medium according to any of claims 1 to 6, wherein said carbon nanotubes are soluble in organic solvents.
